(19) Europäisches Patentamt
European Patent Office
Office européen des brevets

(11) Veröffentlichungsnummer: **0 040 780**
**A1**

(12) # EUROPÄISCHE PATENTANMELDUNG

(21) Anmeldenummer: **81103783.7**

(22) Anmeldetag: **18.05.81**

(51) Int. Cl.³: **D 06 P 5/12**, C 09 B 29/40
// D06P5/17, D06P3/54

(30) Priorität: **23.05.80 DE 3019739**

(43) Veröffentlichungstag der Anmeldung: **02.12.81**
**Patentblatt 81/48**

(84) Benannte Vertragsstaaten: **CH DE FR GB IT LI**

(71) Anmelder: **CASSELLA Aktiengesellschaft, Hanauer Landstrasse 526, D-6000 Frankfurt am Main 61 (DE)**

(72) Erfinder: **Tappe, Horst, Dr., Ringstrasse 9, D-6057 Dietzenbach (DE)**
Erfinder: **Kindler, Horst, Dr., Birsteinerstrasse 14, D-6000 Frankfurt/Main 61 (DE)**
Erfinder: **Roth, Kurt, Breckenheimerstrasse 35, D-6238 Hofheim/Ts. (DE)**
Erfinder: **Weyer, Hans-Jürgen, Stettinerstrasse 10, D-6000 Frankfurt/Main 60 (DE)**

(74) Vertreter: **Urbach, Hans-Georg, Dr. et al, Hanauer Landstrasse 526, D-6000 Frankfurt am Main 61 (DE)**

(54) **Verfahren zum Bedrucken von synthetischem hydrophobem Fasermaterial.**

(57) Verfahren zur Herstellung von weißen oder verschiedenfarbigen Mustern auf farbigem Untergrund auf Textilmaterialien enthaltend oder bestehend aus hydrophoben synthetischen Fasern, insbesondere Polyesterfasern, durch Imprägnieren der Materialien mit Farbflotten, die neben üblichen Färbe- und Klotzhilfsmitteln weißätzbare Farbstoffe und gegebenenfalls ätzmittelbeständige Farbstoffe enthalten, Trocknen oder Antrocknen der geklotzten Materialien und anschließendes Aufdrucken einer Ätzreservepaste, die gewünschtenfalls neben dem Ätzmittel noch ätzmittelbeständige Farbstoffe enthält, in dem gewünschten Muster und anschließende Wärmebehandlung bei Temperaturen von 100 bis 230°C, bei dem als weißätzbare Farbstoffe solche der Formel I eingesetzt werden,

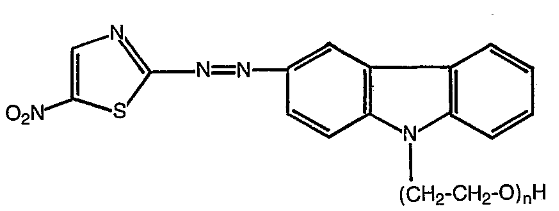

(I)

worin n eine Zahl von 1 bis 9 ist, und als Ätzmittel eine Base, die in 5%iger wässriger Lösung mindestens einen pH-Wert von 8 hervorbringt, verwendet wird.

EP 0 040 780 A1

Dr. Va/Jt
Ref. 3188

Verfahren zum Bedrucken von synthetischem hydrophobem Fasermaterial

Die vorliegende Erfindung betrifft ein Verfahren zur Herstellung von Ätzreservedrucken auf Textilmaterialien, insbesondere solchen, die hydrophobe Fasern, vorzugsweise Polyesterfasern, in überwiegendem Maße enthalten oder aus solchen Fasern bestehen, durch Imprägnieren der Materialien mit Farbflotten, die neben üblichen Färbe- und Klotzhilfsmitteln weißätzbare Farbstoffe und gegebenenfalls ätzmittelbeständige Farbstoffe enthalten, Trocknen oder Antrocknen der geklotzten Materialien und anschließendes Aufdrucken einer Ätzreservepaste, die gewünschtenfalls neben dem Ätzmittel noch ätzmittelbeständige Farbstoffe enthält und anschließende Wärmebehandlung bei Temperaturen von 100 bis 230°C, wobei als weißätzbare Farbstoffe die im Anspruch 1 durch die Formel I charakterisierten Farbstoffe eingesetzt werden und als Ätzmittel eine Base der im Anspruch 1 angegebenen Art.

Auf dem Gebiet des Textildrucks war es seit jeher ein Problem, weiße oder farbige scharf begrenzte Muster auf tiefgefärbtem Hintergrund zu erzeugen. Insbesondere, wenn die Herstellung filigranartiger Muster auf dunklem Untergrund gewünscht wird, versagt der direkte Druck des Textilmaterials völlig. Um solche Dessins herzustellen, ist es seit langem bekannt, auf einer mit einem weißätzbaren Farbstoff hergestellten tiefen Hintergrundfärbung eine Ätzpaste in dem gewünschten Muster aufzudrucken und anschließend durch eine trockene oder nasse Wärmebehandlung den Farbstoff an den mit der Ätzpaste bedruckten Stellen zu zerstören. Nach dem Auswaschen der so erhaltenen Drucke wird das gewünschte Muster weiß auf dunklem Fond erhalten. Es ist auch bereits bekannt, den Ätzdruckpasten Farbstoffe zuzusetzen, die gegen das Ätzmittel resistent sind.

In diesem Fall wird gleichzeitig mit der Zerstörung der Fondfärbung eine Färbung des Textilmaterials an den bedruckten Stellen durch den unzerstörbaren Farbstoff vorgenommen. Man erhält in diesem Fall farbige Drucke auf dunklem Fond. Farbige Drucke auf dunklem Fond können auch erhalten werden, wenn der dunkle Fond mit einer Mischung eines ätzbaren und eines andersfarbigen nichtätzbaren Farbstoffs hergestellt wird, indem man beide Farbstofftypen in die Klotzflotte einbringt.

Bei der Übertragung dieser bekannten Verfahren auf synthetische Fasermaterialien oder Textilmaterialien, die vorzugsweise aus hydrophoben synthetischen Fasern bestehen, ergibt sich insofern ein Problem, als die Ätzung von beispielsweise mit Dispersionsfarbstoffen angefärbten Polyesterfasern sehr schwierig ist. Dispersionsfarbstoffe, die einmal in der Polyesterfaser fixiert, d.h. gelöst sind, sind dem Zugriff wässriger Agenzien weitgehend entzogen und somit auch dem Angriff von wäßrigen Ätzpasten. Bei der Herstellung von Ätzdrucken auf hydrophobe Fasern enthaltenden oder aus hydrophoben Fasern bestehenden Textilmaterialien wird daher das bekannte Ätzdruckverfahren in der Weise abgewandelt, daß das Textilmaterial zunächst mit einer Dispersionsfarbstoff enthaltenden Farbflotte geklotzt und getrocknet oder angetrocknet wird, wobei jedoch keine Fixierung des Farbstoffs, d.h. Lösung des Farbstoffs in der hydrophoben Faser, erfolgen darf. Auf das getrocknete oder angetrocknete geklotzte Gewebe wird sodann das gewünschte Muster mit der Ätzdruckpaste aufgedruckt und das geklotzte und bedruckte Gewebe anschließend einer Wärmebehandlung unterworfen, wobei gleichzeitig der Fondfarbstoff an den nicht bedruckten Stellen in den Polyester einwandert, d.h. fixiert wird und an den bedruckten Stellen der Farbstoff zerstört wird, d.h. keine Färbung erfolgt. Im Hinblick auf diesen Mechanismus wird dieses Verfahren auch als Ätzreservedruck bezeichnet.

Das an sich einfache Verfahren des Ätzreservedrucks beinhaltet eine Reihe technischer Schwierigkeiten, die seinen Einsatz häufig erschweren. So ist es in der Regel nicht einfach, den Fondfarbstoff durch das Ätzmittel restlos zu zerstören. Gelingt dies nicht, so hinterbleibt auf den geätzten Stellen ein farbiger Rückstand, dessen Nuance zwischen gelbbraunen und stumpfviolett bzw. rotstichig grauen Tönen schwanken kann und der den Weißfond an den geätzten Stellen anschmutzt. Dies führt zu unsauber erscheinenden Weißätzen oder für den Fall, daß eine Buntätze hergestellt werden soll, zu einer Verfälschung der Nuance des ätzmittelbeständigen Farbstoffs. Um diese Schwierigkeit zu überwinden, werden Ätzpasten verwendet, die relativ starke Reduktions- oder Oxydationsmittel enthalten, wie z.B. Natriumdithionit, in Verbindung mit Alkali, Alkaliformaldehydsulfoxylate oder gar Schwermetallsalze, wie beispielsweise Zinn-2-chlorid. Mit derartigen starken Ätzmitteln gelingt zwar in der Regel, einen einwandfreien Weißätzdruck zu erzielen, jedoch tritt häufig eine Schädigung des Fasermaterials ein, insbesondere dann, wenn die Polyesterfaser noch Begleitfasern, wie beispielsweise Zellulosefasern, enthält. Ferner sind diese Ätzmittel in der Regel nicht billig, und im Falle der Schwermetallätzmittel stellen sie eine zusätzliche ökologische Belastung dar bzw. verursachen sie zusätzliche Aufwendungen bei der Einigung der Abwässer. Hinzukommt, daß es nur relativ wenige Farbstofftypen gibt, die gegen derartige Ätzmittel resistent sind, und so ist die Auswahl von ätzmittelbeständigen Farbstoffen, die zur Herstellung von Buntätzen verwendet werden können, relativ gering.

Zur Überwindung dieser Schwierigkeiten benötigt man Dispersionsfarbstoffe für die Hintergrundfärbung, die sich mit möglichst milde wirkenden Agenzien reinweiß ätzen lassen. Aus den Deutschen Offenlegungsschriften 26 12 740, 26 12 741, 26 12 742, 26 12 790, 26 12 791, 26 12 792 sind Dispersionsfarbstoffe bekannt, die in ihrem Molekül mindestens 2 veresterte Carboxylgruppen enthalten. Derartige Farbstoffe verseifen bei der Behandlung mit wäßrigen Alkalien unter Bildung von alkalilöslichen, Carboxylgruppen enthaltenden Farbstoffen. Die Verwendung derartiger Farbstoffe als Dispersionsfarbstoffe zum Färben von Polyestermaterialien hat den Vorteil, daß nicht fixierte Farbstoffreste von dem Textilmaterial durch einfache Behandlung mit alkalisch wirkenden Mitteln abgewaschen werden können. Es ist auch bereits bekannt, daß sich von Färbungen mit Dispersionsfarbstoffen, die als Kupplungskomponente Pyridonderivate enthalten, nicht fixierte Farbstoffreste leicht durch eine Alkalibehandlung von der Faser entfernen lassen. Diese in wäßrigen Alkalien löslichen Farbstoffe haben jedoch, soweit es Pyridonfarbstoffe betrifft, den Nachteil, daß sie im wesentlichen ausschließlich für gelbe oder rotstichig gelbe Nuancen eingesetzt werden können, soweit es Farbstoffe mit veresterten Carboxylgruppen betrifft, daß sie nach der Verseifung der Estergruppen eine gewisse Affinität zu hydrophilen Fasern, wie beispielsweise, Wolle, Baumwolle oder Polyamidfasern, aufweisen und diese anfärben oder anschmutzen. Außerdem stellen die Diazo- bzw. Kupplungskomponenten, die für die Herstellung Carbonsäureestergruppen enthaltender Farbstoffe benötigt werden, keine gängigen Substanzen der chemischen Großindustrie dar, sondern müssen gesondert für diese Farbstofftypen hergestellt werden, was in der Regel unwirtschaftlich teuer ist. Das Bedürfnis, unter relativ milden Ätzbedingungen reinweiß ätzbare Dispersionsfarbstoffe bei dem Verfahren des Ätzreservedrucks auf hydrophoben Textilmaterialien einzusetzen, konnte daher durch die obenangegebenen Farbstofftypen nicht befriedigt werden.

Es wurde nun überraschend gefunden, daß die Schwierigkeiten bei der Durchführung des Ätzreservedrucks auf Textilmaterialien, die ganz oder überwiegend aus hydrophoben synthetischen

Fasern bestehen, überwunden werden können, wenn man diese Materialien in an sich bekannter Weise mit Farbflotten, die neben üblichen Färbe- und Klotzhilfsmitteln weißätzbare Farbstoffe und gegebenenfalls ätzmittelbeständige Farbstoffe enthalten, imprägniert, die imprägnierten Gewebe trocknet oder antrocknet und anschließend mit einer Ätzreservepaste, die gewünschtenfalls neben dem Ätzmittel noch einen ätzmittelbeständigen Farbstoff enthält, in dem gewünschten Muster bedruckt, und man dabei als weißätzbare Farbstoffe solche der Formel I

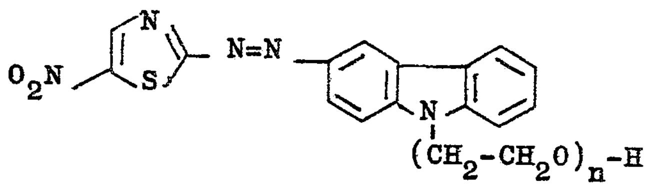

(I)

einsetzt, worin n = eine Zahl von 1 bis 9, vorzugsweise 1 bis 5, bedeutet und als Ätzmittel eine Base, die in 5%iger wäßriger Lösung mindestens einen pH-Wert von 8 hervorbringt. Vorteilhaft, insbesondere im Hinblick auf die erzielbare Farbtiefe, ist der Einsatz von Mischungen von mehreren, in der Regel 2 bis 4, Farbstoffen der Formel I, wobei die Anteile der Einzelfarbstoffe zweckmäßigerweise zwischen 5 und 95%, insbesondere zwischen 10 und 40 %, liegen.

Besonders bevorzugt ist der Einsatz von Farbstoffmischungen der Formel I, worin n eine Zahl zwischen 1 und 5 ist. Basen, die als Ätzmittel in der Ätzreservedruckpaste enthalten sind und die in 5%iger wäßriger Lösung mindestens einen pH-Wert von 8 hervorbringen, sind in großer Zahl bekannt. Beispiele für solche Basen sind die Hydroxide der Alkali- und Erdalkalimetalle, Salze von Erdalkali- und Alkalimetallen mit schwachen organischen oder anorganischen Säuren, Ammoniak oder auch aliphatische Amine, wie z.B. Triäthyl-, Tripropyl- oder Tributylamin, Äthanolamin, Dimethyl- oder Diäthyläthanolamin, Diäthanolamin, Methyl-, Äthyl- oder Propyl-diäthanolamin oder Triäthanolamin. Üblicherweise werden als Basen Erdalkali-

hydroxyde, wie z.B. Calciumhydroxyd, Alkalihydroxyde, wie beispielsweise Natrium- oder Kaliumhydroxyd, oder Alkalisalze mit schwachen anorganischen Säuren, wie beispielsweise Alkalicarbonat oder Trialkaliphosphat, eingesetzt. Vorzugsweise wird als Base in den Ätzreservedruckpasten Natrium- oder Kaliumhydroxyd oder Natrium- oder Kaliumcarbonat oder Natrium- oder Kaliumbicarbonat verwendet.

Die Durchführung des erfindungsgemäßen Verfahrens erfolgt in an sich bekannter Weise durch Klotzen der Textilmaterialien mit Farbflotten, die einen oder mehrere Farbstoffe der Formel I neben den bekannten üblichen Färbereihilfsmitteln, wie beispielsweise Dispergiermitteln, Netzmitteln, Schaumdämpfungsmitteln und Klotzhilfsmitteln, enthalten, und Abquetschen der geklotzten Gewebebahnen auf eine Flottenaufnahme von 50 bis 120 %. Anschließend werden die Gewebebahnen durch Warmluft mit eventueller vorausgehender Infrarotstrahlung getrocknet, wobei die Temperatur ca. 80 - maximal etwa 150°C - bei entsprechender Verkürzung der Zeit beträgt. Die so vorbereiteten Gewebebahnen werden dann mit einer Ätzreservedruckpaste bedruckt, die als Ätzmittel eine der oben näher bezeichneten Basen sowie die in Druckpasten für den Textildruck üblichen bekannten Zusatzstoffe, insbesondere Verdickungsmittel, enthält. Anschließend werden die geklotzten und bedruckten Gewebebahnen einer Wärmebehandlung zwischen 100 und 230°C unterworfen. Im unteren Temperaturbereich von etwa 100 bis 190°C erfolgt die Wärmezufuhr vorzugsweise durch überhitzten Wasserdampf. Für Wärmebehandlungen, die zwischen 160 und 230°C durchgeführt werden, wird als Wärmeträger vorzugsweise Heißluft verwendet. Nach der Hitzebehandlung, die eine Fixierung der Dispersionsfarbstoffe sowie die Zerstörung der Forbstoffe der Formel I an den mit der Ätzreservedruckpaste bedruckten Stellen zur Folge hat, werden die Textilien in der für PES

üblichen Art und Weise nachbehandelt, heiß und kalt gespült und getrocknet. Eine besondere Ausführungsform des erfindungsgemäßen Verfahrens besteht darin, daß die Klotzflotte außer Farbstoffen der Formel I zusätzlich solche enthält, die alkalibeständig sind und somit durch die erfindungsgemäß einzusetzenden alkalischen Ätzreservedruckpasten nicht zerstört werden. Verfährt man im übrigen wie oben angegeben, so erhält man mehrfarbige Dessins. Eine weitere Ausführungsform des erfindungsgemäßen Verfahrens besteht darin, daß man die Farbstoffe der Formel I nicht durch Klotzen mit einer Klotzflotte auf dem gesamten Gewebe appliziert, sondern ebenfalls in Form von Druckpasten auf das Gewebe aufdruckt und anschließend mit der Ätzreservedruckpaste überdruckt. Fixierung und Fertigstellung der Textildrucke erfolgt dann anschließend wie oben bereits beschrieben. Auch bei diesem Verfahren ist es möglich, den als erstes aufgedruckten Farbdruckpasten Farbstoffe zuzusetzen, die alkaliresistent sind. Auch in diesem Falle werden mehrfarbige Dessins erhalten. Eine weitere Möglichkeit zur Durchführung des erfindungsgemäßen Verfahrens besteht darin, daß auf den mit Farbstoffen der Formel I geklotzten oder bedruckten Fond Ätzreservedruckpasten aufgedruckt werden, die ihrerseits alkaliresistente Farbstoffe enthalten. Bei anschließender Fixierung und Fertigstellung der Textilmaterialien wie oben beschrieben werden auch hier mehrfarbige Dessins erhalten.

Die Farbstoffe der Formel I liegen in den Klotzflotten bzw. in den Druckpasten in fein dispergierter Form vor, wie es für Dispersionsfarbstoffe üblich und bekannt ist. Auch die Herstellung der Klotzflotten bzw. Druckpasten, die erfindungsgemäß einzusetzen sind, erfolgt in an sich bekannter Weise durch Mischen der Flotten- bzw. Druckpastenbestandteile mit der nötigen Menge Wasser und flüssigen feindispersen oder festen redispergierbaren Einstellungen der Farbstoffe der

Formel I.

Alkaliresistente Dispersionsfarbstoffe, die zur Herstellung von mehrfarbigen Dessins mit dem Farbstoff der Formel I kombiniert werden können, sind die bekannten Handelsfarbstoffe aus der Gruppe der Azo- oder Azomethin-, Chinophthalon-, Nitro- oder Anthrachinonfarbstoffe. Einige Beispiele für alkaliresistente Dispersionsfarbstoffe sind:

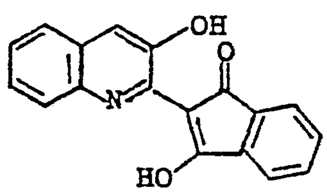 , 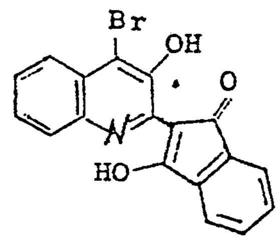 ,

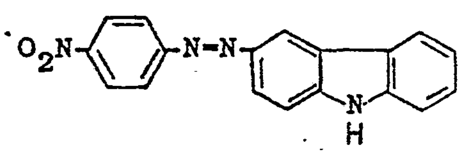 , 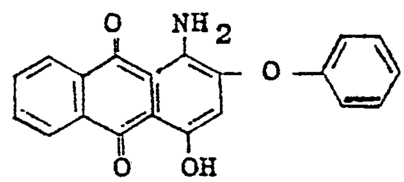 ,

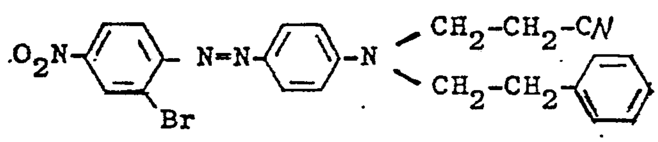 ,

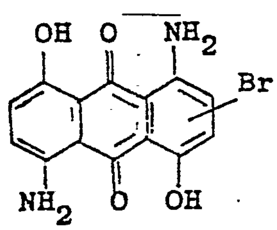 , 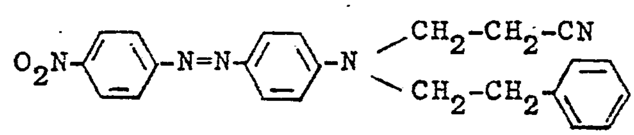 ,

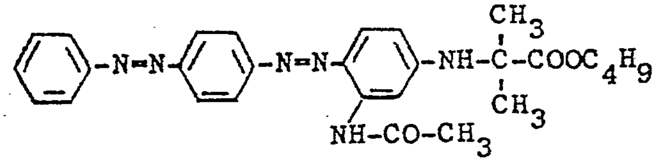

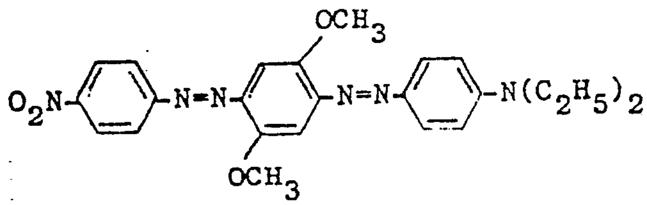

Die erfindungsgemäß eingesetzten Dispersionsfarbstoffe der Formel I sind zum Teil bereits aus der amerikanischen Patentschrift 37 87 178 bekannt. Soweit die Farbstoffe in der genannten Druckschrift nicht genannt bzw. umfaßt sind, lassen sie sich jedoch in völliger Analogie zu den dort beschriebenen Herstellungsverfahren herstellen, indem man das Amin der Formel II

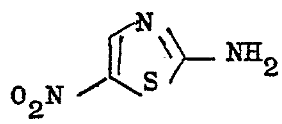

(II)

in an sich bekannter Weise diazotiert und mit einer Kupplungskomponente oder einem Gemisch mehrerer Kupplungskomponenten der Formel III

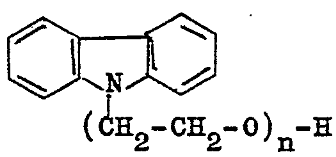

(III)

kuppelt, wobei n die obenangegebene Bedeutung besitzt.

Die Diazotierung des Amins der Formel II kann beispielsweise wie folgt vorgenommen werden:

Einer Lösung oder Suspension des Amins der Formel II in einer wäßrigen starken anorganischen Säure setzt man 1 bis 1,1 Äquivalente einer wäßrigen Natriumnitritlösung zu. Man kann das Amin der Formel II auch in einer organischen Säure wie z.B. Essigsäure oder Propionsäure oder einem Gemisch dieser Säuren, lösen bzw. suspendieren und durch Zugabe von Nitrosylschwefelsäure diazotieren. Die resultierende Lösung oder Suspension der

Diazoverbindung wird dann bei Temperaturen von -20 bis +30°C, vorzugsweise -10 bis +10°C, mit einer Lösung der Kupplungskomponente III in Wasser, welches eine Säure und/oder eine teilweise oder ganz wasserlösliche organische Verbindung, wie z.B. Isobutanol oder Aceton, enthält, oder in Essigsäure bzw. wäßriger Essigsäure vereinigt. Zur Zerstörung der überschüssigen salpetrigen Säure versetzt man die Kupplungslösung gegebenenfalls mit Sulfaminsäure oder Harnstoff. Nach beendeter Kupplung, die gegebenenfalls durch Zugabe von Basen, wie z.B. Natriumacetat, erleichtert werden kann, wird der Farbstoff der Formel I in der üblichen Weise isoliert.

Die zur Herstellung der erfindungsgemäß einzusetzenden Farbstoffe erforderlichen Kupplungskomponenten der Formel III können nach bekannten Verfahren, z.B. durch Umsetzung von Carbazol mit Ethylenoxid oder Ethylenchlorhydrin in Gegenwart von Ketonen (Britische Patentschrift Nr. 620 733; J. Amer.Chem. Soc. 70, Seite 3019 (1948); Deutsche Offenlegungsschrift Nr. 23 54 326; CA 63, Seite 565 (1965) und CA 81, Seite 25550 (1974)), oder durch Umsetzung der Ausgangsmaterialien in organischen Lösungsmitteln, wie z.B. Dimethylsulfoxid, hergestellt werden. Eine besonders vorteilhafte Herstellungsweise der Kupplungskomponenten der Formel III besteht darin, daß man Carbazol in einem mit Wasser nicht mischbaren organischen Lösungsmittel bei Temperaturen von 20 bis 150°C in Gegenwart einer Base und eines Phasentransferkatalysators mit einem Epoxid der Formel IV oder Chlorhydrin der Formel V

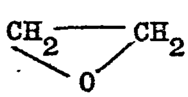 (IV) 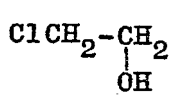 (V)

umsetzt.

Die Durchführung des erfindungsgemäßen Verfahrens erfolgt in der Weise, daß man die Reaktanten unter den obenangegebenen erfindungsgemäßen Reaktionsbedingungen in einem Mehrphasensystem, das aus einer flüssigen, nicht wäßrigen und einer oder mehreren festen Phasen besteht, zusammen reagieren läßt.

In der Regel wird Carbazol gelöst oder ungelöst und die Base ungelöst in einem System aus Lösungsmittel und Phasentransferkatalysator vorgelegt und das Epoxid oder Chlorhydrin anschließend zudosiert.

Durch Variation des Molverhältnisses Carbazol : Epoxid bzw. Chlorhydrin kann man Verbindungen mit verschiedenen Werten für n erhalten. Bei den in der nachfolgenden Tabelle angegebenen Molverhältnissen Carbazol : Ethylenoxid werden theoretisch die angegebenen Werte für n in der Verbindung I erhalten:

| Molverhältnis Carbazol : Epoxid | n |
|---|---|
| 1 : 1 | 0 |
| 1 : 2 | 1 |
| 1 : 3 | 2 |
| 1 : 4 | 3 |
| 1 : 5 | 4 |

Als mit Wasser nicht mischbare, organische Lösungsmittel werden flüssige aliphatische oder aromatische Kohlenwasserstoffe verwendet, wie z.B. Ligroin, Leicht- und Schwerbenzin, Toluol, ortho-, meta-, para-Xylol, Monochlorbenzol, ortho-, meta-, para-Dichlorbenzol, ortho-, meta-, para-Chlortoluol.

Als Basen werden solche Verbindungen eingesetzt, die in der Lage sind, Carbazol im Gleichgewicht zumindest teilweise in das Anion zu überführen. Derartige Basen sind z.B. Alkalimetallhydroxide oder Alkalimetallhydride.

Die Menge des einzusetzenden Phasentransferkatalysators beträgt zweckmäßigerweise 2 bis 20 Mol%, bezogen auf die Menge Carbazol. Vorzugsweise werden 4 bis 15 Mol%, insbesondere 10 bis 15 Mol%, des Phasentransferkatalysators eingesetzt. Eine zusammenfassende Übersicht über geeignete Phasentransferkatalysatoren befindet sich beispielsweise in dem Buch von W.P. Weber und G.W. Gokel, Phase Transfer Catalysis in Organic Synthesis, Springer Verlag, Berlin, New York 1977.

Beispiele für Kupplungskomponenten der Formel III sind

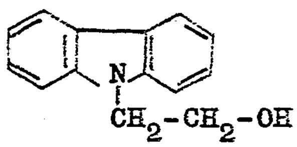

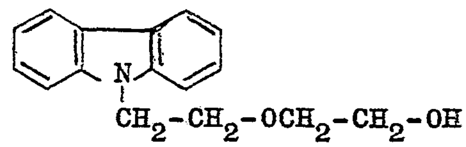

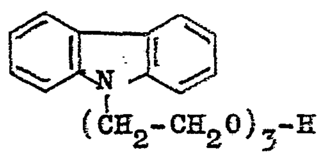

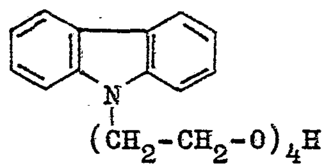

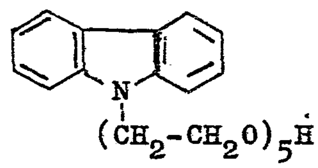

## Beispiel 1

30 Teile des Farbstoffs der Formel IV

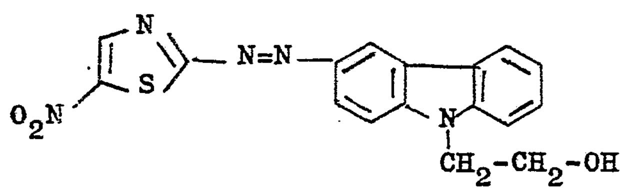

werden in feiner Verteilung zu einer Klotzflotte gegeben, die 937 Teile Wasser, 3 Teile Mononatriumphosphat, 10 Teile Natriumchlorat und 20 Teile eines Polymerisationsproduktes auf Acrylsäurebasis als Antimigrationsmittel auf 1000 Teile enthält. Nach dem Trocknen wird mit einer Druckpaste, die 600 Teile einer wäßrigen 10%igen Johanniskernmehlätherverdickung, 120 Teile Wasser, 80 Teile Natriumcarbonat, 100 Teile Polyethylenglykol 400 und 100 Teile Glycerin auf 1000 Teile ent-hält, überdruckt. Nach dem Fixieren mit überhitztem Dampf während 7 Minuten bei 175°C, reduktivem Nachbehandeln, Seifen, anschließendem Spülen und Trocknen erhält man einen rubinfarbenen Druck mit sehr guten Echtheiten, vor allem guter Licht-, Trockenhitzefixier-, Reib- und Waschechtheit. An den Stellen, auf die die sodahaltige Druckpaste aufgedruckt wird, erhält man einen sehr guten Weißfond mit scharfen Konturen.

Beispiel 2

Anstelle von 30 Teilen des Farbstoffs von Beispiel 1 werden 20 Teile des Farbstoffgemisches der Formel V

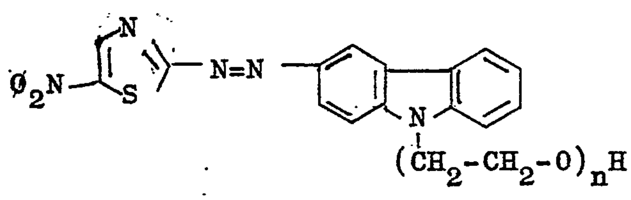

worin n: 50% = 1
35% = 2
10% = 3
5% = 4 ist;

verwendet und im übrigen so verfahren, wie im Beispiel 1 anggegeben. Man erhält einen rubinfarbenen Druck mit sehr guten coloristischen Eigenschaften, insbesondere mit einer guten Licht-, Trockenhitzefixier-, Reib- und Waschechtheit und an den geätzten Stellen einen sehr guten Weißfond mit scharfen Konturen.

P a t e n t a n s p r ü c h e

1. Verfahren zur Herstellung von weißen oder verschiedenfarbigen Mustern auf farbigem Untergrund auf Textilmaterialien, enthaltend oder bestehend aus hydrophoben synthetischen Fasern, insbesondere Polyesterfasern, durch Imprägnieren der Materialien mit Farbflotten, die neben üblichen Färbe- und Klotzhilfsmitteln weißätzbare Farbstoffe und gegebenenfalls ätzmittelbeständige Farbstoffe enthalten, Trocknen oder Antrocknen der geklotzten Materialien und anschließendes Aufdrucken einer Ätzreservepaste, die gewünschtenfalls neben dem Ätzmittel noch ätzmittelbeständige Farbstoffe enthält, in dem gewünschten Muster und anschließende Wärembehandlung bei Temperaturen von 100 bis 230°C, dadurch gekennzeichnet, daß als weißätzbare Farbstoffe solche der Formel I eingesetzt werden,

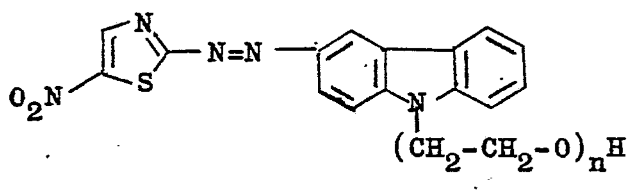

(I)

worin n eine Zahl von 1 bis 9 ist, und als Ätzmittel eine Base, die in 5%iger wäßriger Lösung mindestens einen pH-Wert von 8 hervorbringt.

2. Verfahren nach Anspruch 1, dadurch gekennzeichnet, daß man Farbstoffe der Formel I einsetzt, worin n eine Zahl von 1 bis 5 ist.

3. Verfahren nach den Ansprüchen 1 und 2, dadurch gekennzeichnet, daß man Mischungen von Farbstoffen der Formel I einsetzt.

4. Verfahren nach den Ansprüchen 1 - 3, dadurch gekennzeichnet, daß als Base Alkalimetallhydroxide oder -carbonate oder -bicarbonate eingesetzt werden.

5. Verfahren nach den Ansprüchen 1 bis 4, dadurch gekennzeichnet, daß als Base $Na_2CO_3$ eingesetzt wird.

6. Textilmaterialien enthaltend oder bestehend aus hydrophoben synthetischen Fasern, insbesondere Polyesterfasern, mit weißen oder verschiedenfarbigen Mustern auf farbigem Untergrund, dadurch gekennzeichnet, daß sie nach dem Verfahren der Ansprüche 1 bis 5 hergestellt worden sind.

0040780

Europäisches Patentamt

# EUROPÄISCHER RECHERCHENBERICHT

Nummer der Anmeldung
EP 81 10 3783

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | GB - A - 2 028 383 (CASSELLA)<br>* Insgesamt *<br>& DE - A - 2 836 391<br>-- | 1,4-6 | D 06 P 5/12<br>C 09 B 29/40//<br>D 06 P 5/17<br>3/54 |
| DA | US - A - 3 787 178 (E.E. RENFREW)<br>* Ansprüche 1,2; Beispiel 13 *<br>-- | 1,2 | |
| P | EP - A - 0 013 378 (CASSELLA)<br>* Insgesamt *<br>---- | 1,6 | RECHERCHIERTE SACHGEBIETE (Int. Cl.³)<br>D 06 P 5/12<br>5/15<br>1/18<br>C 09 B 29/40<br>D 06 P 3/54 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 24-08-1981 | DEKEIREL |